# EUROPEAN PATENT APPLICATION

(11) **EP 4 401 450 A1**
(43) Date of publication of application: **17.07.2024**
(21) Application number: 22871367.3
(22) Date of filing: 13.04.2022
(51) Int. Cl.: H04W 16/18

(54) **NETWORKING METHOD AND APPARATUS, DEVICE AND STORAGE MEDIUM**

(30) Priority: 27.09.2021 CN 202111148503
(71) Applicant: ZTE Corporation, Shenzhen, Guangdong 518057 (CN)
(72) Inventor: LU, Cuiling, Shenzhen, Guangdong 518057 (CN)
(74) Representative: Savi, Massimiliano
(86) International application number: PCT/CN2022/086667
(87) International publication number: WO 2023/045304

(57) **Abstract**

A networking method and apparatus, a device, and a storage medium. The networking method comprises: receiving first network parameters of a plurality of devices to be networked, and determining a first master device and a child device from said plurality of devices according to the first network parameters (101); sending a first switch instruction to said device, such that said device is switched to the first master device or the child device according to the first switch instruction (102); receiving first hotspot information sent by the first master device (103); and sending the first hotspot information to the child device, such that the child device establishes a network connection with the first master device according to the first hotspot information (104).

## Description

### CROSS-REFERENCE TO RELATED APPLICATION

This application is filed on the basis of the Chinese patent application No. 202111148503.X filed September 27, 2021, and claims priority of the Chinese patent application, the entire contents of which are incorporated herein by reference.

### TECHNICAL FIELD

The present invention relates to the field of communication, and in particular to a method for networking, a device, an apparatus, and a storage medium.

### BACKGROUND

Wireless Fidelity (Wi-Fi) technique is indispensable for the use of smart terminal devices in modern society. Wi-Fi has been widely used in every aspect of our work, life and study. In particular, Wi-Fi coverage can facilitate smart terminal users to carry out online entertainment and work anytime, anywhere, while Wi-Fi coverage requires Wi-Fi extension, which is generally carried out by way of networking.

In some cases, networking is mainly based on networking devices. However, manual parameter settings are required during networking, which lowers down the efficiency of the networking.

### SUMMARY

The following is a summary of the subject matter described herein. This summary is not intended to limit the scope of protection of the claims.

Provided are a method for networking, a device, an apparatus, and a storage medium in some embodiments of the present invention.

According to an aspect of the present invention, an embodiment provides a method for networking, which includes: receiving a first network parameter from each of a plurality of devices to be networked, and determining a first master device and several child devices from the plurality of devices to be networked according to the first network parameters; sending a first switching instruction to each of the devices to be networked, such that each of the devices to be networked is switched to be the first master device or as the child device according to the first switching instruction; receiving first hotspot information sent by the first master device; and sending the first hotspot information to each child device, such that the respective child device establishes a network connection with the first master device according to the first hotspot information.

According to another aspect of the present invention, an embodiment provides a method for networking, which includes: sending a first network parameter to a cloud server, such that the cloud server determines a first master device and several child devices from a plurality of devices to be networked according to the first network parameter; receiving a first switching instruction sent by the cloud server, and switching to be a first master device according to the first switching instruction; sending first hotspot information to the cloud server, such that the cloud server sends the first hotspot information to each of the child devices; and receiving a connection request sent by each of the child devices according to the first hotspot information, and establishing a network connection with each of the child devices according to the connection request.

According to yet another aspect of the present invention, an embodiment provides a method for networking, which includes, sending a first network parameter to a cloud server, such that the cloud server determines a first master device and several child devices from a plurality of devices to be networked according to the first network parameter; receiving a first switching instruction sent by the cloud server, and switching to be a child device among the several child devices according to the first switching instruction; and receiving first hotspot information of the first master device sent by a cloud server, and sending a connection request to the first master device according to the first hotspot information; where the connection request is intended to establish a network connection with the first master device.

According to yet another aspect of the present invention, an embodiment provides a device for networking, which includes a memory, a processor and a computer program stored in the memory and executable by the processor which, when executed by the processor causes the processor to carry out the method as described in the first aspect above.

According to a yet another aspect of the present invention, an embodiment provides a network apparatus, which includes a memory, a processor and a computer program stored in the memory and executable by the processor which, when executed by the processor causes the processor to carry out the method according to the second aspect or the third aspect as described above.

According to a yet another aspect of the present invention, an embodiment provides a computer-readable storage medium, which stores thereon a computer-executable instruction which, when executed by a processor causes the processor to carry out any one of the methods of the first aspect, the second aspect or the third aspect as described above.

Other features and advantages of the present invention will be illustrated in the following description, and in part will be apparent from the description, or may be understood by practicing the present invention. The objects and other advantages of the present invention can be achieved and obtained by the structure particularly set forth in the description, claims and drawings.

### BRIEF DESCRIPTION OF DRAWINGS

The drawings are intended to provide a further understanding of the technical scheme of the present invention, and constitute a part of the specification, and they are intended to illustrate the technical scheme of the present invention in conjunction with the embodiments of the present invention, but are not intended to limit the technical scheme of the present invention.
FIG. 1 depicts a flowchart showing a method for networking according to an embodiment of the present invention;
FIG. 2 depicts a flowchart showing a method for networking according to another embodiment of the present invention;
FIG. 3 depicts a flowchart showing a method for networking according to another embodiment of the present invention;
FIG. 4 depicts an architectural diagram showing a system in which a method for networking according to some embodiments of the present invention may be carried out;
FIG. 5 depicts a flowchart showing a method for networking according to another embodiment of the present invention;
FIG. 6 depicts a flow chart showing the operations of a cloud server in a method for networking according to an embodiment of the present invention;
FIG. 7 depicts a flowchart showing a method for networking according to an embodiment of the present invention;
FIG. 8 depicts a schematic diagram showing a networking connection of a method for networking according to an embodiment of present invention;
FIG. 9 depicts a flowchart showing a method for networking according to another embodiment of the present invention;
FIG. 10 depicts a flowchart showing a method for networking according to another embodiment of the present invention;
FIG. 11 depicts a flowchart showing a method for networking according to another embodiment of the present invention;
FIG. 12 depicts a flowchart showing the operations of a master device in a method for networking according to an embodiment of the present invention;
FIG. 13 depicts a flowchart showing a method for networking according to another embodiment of the present invention;
FIG. 14 depicts a flowchart showing a method for networking according to another embodiment of the present invention;
FIG. 15 depicts a flowchart showing a method for networking according to another embodiment of the present invention;
FIG. 16 depicts a flowchart showing the operations of a child device in a method for networking according to an embodiment of the present invention;
FIG. 17 depicts a flowchart showing a method for networking according to an embodiment of the present invention;
FIG. 18 depicts a schematic diagram showing a device for networking according to an embodiment of the present invention; and
FIG. 19 depicts a schematic diagram showing an apparatus for networking according to an embodiment of the present invention.

### DETAILED DESCRIPTION

The purpose, technical scheme and advantages of the present invention will become apparent through the following description for various embodiments in conjunction with the drawings. It should be understood that the embodiments described here are intended for illustration but not limitation of the present invention.

It should be understood that in the description of embodiments of the present invention, a plurality (or plurality) means more than one; greater than, less than, more than, etc. shall be understood to exclude the number being referred to; and above, below, within, etc. shall be understood to include the number being referred to. Term "first" and "second" if described, are intended for distinguishing technical features, which shall not be understood as indicating or implying relative importance or implicitly indicating the number of the indicated technical features or the order of the indicated technical features.

In some cases, there are two primary schemes for Wi-Fi networking. The first one is that the master device and the child device cooperate with each other. The master device and the child device have already set the operating mode of the device at factory. The users only need to set some parameters for the master device deployed at home, and then press the buttons of the two devices to complete the networking. The second one is that indoor Wi-Fi routers are sold together with outdoor wireless networking devices. The indoor Wi-Fi routers and outdoor wireless networking devices are connected through network cables. One outdoor wireless networking device can be adapted to multiple indoor Wi-Fi routers. The indoor Wi-Fi routers are equipped with Wi-Fi modules. The indoor Wi-Fi routers are connected through Wi-Fi mesh networking to share the wide area network (WAN) resources of outdoor wireless networking devices. In such a case, an indoor Wi-Fi router does not have the difference between a master device and a child device and is in the routing mode at factory. After networking, the indoor Wi-Fi router connected to the outdoor wireless networking device will switch to be the master device, and other indoor Wi-Fi routers will switch to be the child devices. Networking between indoor Wi-Fi routers also connects the master device and the child devices together through Wi-Fi Protected Setup (WPS). However, these two networking methods have the following problems in use.

First, it is difficult to distinguish between the child device and the master device. If the device identity is not configured in advance, or the configuration is incorrect, an incorrect status of the master device and the child device is caused, and the networking would fail.

Second, the success of WPS pairing depends on its operating mechanism. The timeout of WPS is two minutes. If the WPS of a device fails to start successfully within two minutes, or there are other WPS session in the space, there will be conflicts, which will eventually lead to the failure of networking.

Third, the second networking scheme involves switching the routing mode to the master device operating mode and the child device operating mode, and the operating mode will be restored to the routing mode if the networking fails. Once there is a problem during the networking, the device must be restored from the factory and started again. It takes skilled workers about 6 minutes to complete the networking, so the networking efficiency is low.

In view of this, there is provided a method for networking, a device, an apparatus and a storage medium in some embodiments of the present invention. Thereby, automatic networking is achieved without manual parameter settings, and networking efficiency is improved.

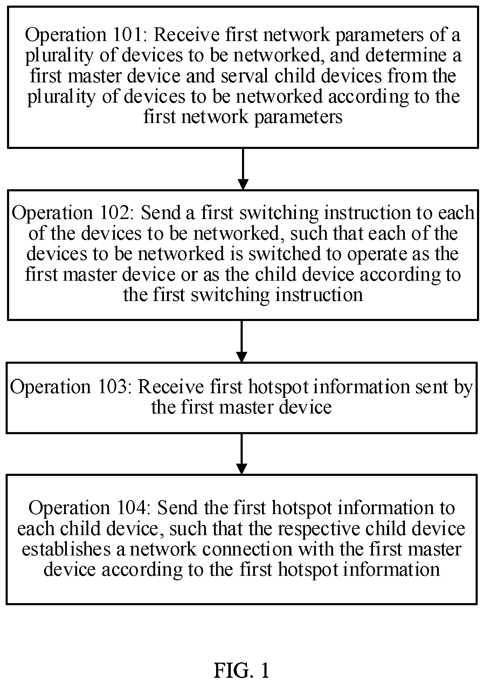

According to a first aspect of the present invention, a method for networking is provided. FIG. 1 depicts a flowchart showing a method for networking according to an embodiment of the present invention. As shown in FIG. 1, the method includes but is not limited to the following operations 101 to 104.

At operation 101, first network parameters of a plurality of devices to be networked are received, and a first master device and a child device are determined from the plurality of devices to be networked according to the first network parameters.

At operation 102, a first switching instruction is sent to each of the devices to be networked, such that each of the devices to be networked is switched to be the first master device or as the child device according to the first switching instruction.

At operation 103, first hotspot information sent by the first master device is received.

At operation 104, the first hotspot information is sent to each child device, such that the respective child device establishes a network connection with the first master device according to the first hotspot information.

From operation 101 to operation 104, a first master device and several child devices are determined from a plurality of devices to be networked according to the received first network parameters. Then a first switching instruction is sent to each of the devices to be networked, such that each of the devices to be networked can be switched to be the first master device or the child device according to the first switching instruction. After the devices to be networked are switched, the first hotspot information is acquired from the first master device. The first hotspot information is sent to each of the child devices. Thereby, the child devices can establish network connection with the master device according to the first hotspot information. Therefore, automatic networking of devices to be networked is achieved without the need for manual parameter settings, and the networking efficiency is improved.

If operations S101 to S 104 are performed by the cloud server, the automatic networking of the devices to be networked can be automatically realized through the cloud server. It is only necessary to start the devices to be networked, the device identities of the devices to be networked can be determined through the cloud server. Then the first switching instruction is sent to the devices to be networked to automatically switch the device identities (i.e., the operating as the master device or the child device). Then the first hotspot information of the first master device is sent to each of the child devices, such that each of the child devices establishes a network connection with the first master device according to the first hotspot information. Thereby, automatic networking is achieved, with manpower saved and networking efficiency improved.

In an implementation, before the first network parameters of a plurality of devices to be networked are received, the method further includes an operation 105 in which, a plurality of network devices are bound according to a preset binding method to obtain the devices to be networked.

It is necessary to identify the devices to be networked before the first network parameters are received from the devices to be networked. Thus, the devices to be networked can be obtained by binding the network devices in a preset binding method. Then the first network parameters sent by the devices to be networked that have been bound can be received.

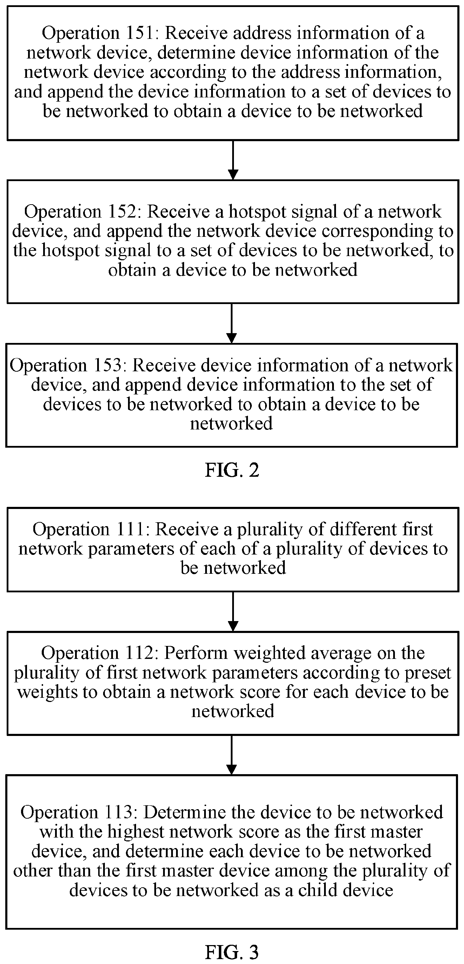

FIG. 2 depicts a flowchart showing a method for networking according to another embodiment of the present invention. Operation 105 includes any one of the following: operation S151, operation S 152 or operation S153.

At operation 151, address information of a network device is received, device information of the network device is determined according to the address information, and the device information is appended to a set of devices to be networked to obtain a device to be networked.

At operation 152, a hotspot signal of a network device is received, and the network device corresponding to the hotspot signal is appended to a set of devices to be networked, to obtain a device to be networked.

At operation 153, device information of a network device is received, and is appended to the set of devices to be networked to obtain a device to be networked.

In an embodiment, operations S151 to S153 are performed by the cloud server. The cloud server constructs a set of devices to be networked to manage the devices to be networked, so as to network the devices to be networked in the set of devices to be networked. Thus, the automatic networking is achieved. The address information, the first hotspot information and the device information of the network device is uploaded to the cloud server through a WeChat applet or an application installed on a terminal device. And the cloud server binds the network device. The terminal device is for example, a mobile terminal device such as a mobile phone, a tablet, or a smart watches, or a non-mobile terminal device such as a desktop computer, or a notebook computer.

It should be noted that in operation S151, an identification code is provided on the network device. The identification code on the network device is scanned by a terminal device to obtain the address information of the network device. The address information is sent from the terminal device to the cloud server. The cloud server receives the address information sent by the terminal device, determines the device information of the network device according to the address information, and appends the device information to the set of devices to be networked to bind the network device to the set to obtain the device to be networked. Subsequently, networking can be performed on each of the devices to be networked in the set of devices to be networked. In an implementation, the address information is MAC address information, or the device serial number or BSSID information of the network device obtained through scanning the identification code by the terminal device. The cloud server determines the device information through the device serial number or the BSSID information, and then appends the device information to the set of devices to be networked to obtain a device to be networked. In an implementation, the identification code provided on the network device includes any one of the following, two-dimensional code, or bar code. Thereby, the binding operation of the network device can be realized by directly scanning the code of the network device.

In operation S152, the hotspot function on the network device is started. The terminal device can scan the hotspot signal within a preset range and then obtain the hotspot signal of the network device. The cloud server receives the hotspot signal sent by the terminal device, obtains the corresponding device information through the hotspot signal, and appends the device information to the set of devices to be networked, so as to realize the automatic binding of the network device. In an embodiment, the terminal device scans hotspot signals within the preset range for a preset time to keep collecting the hotspot signals, and then identifies network device(s) after hotspot signals selection, in which the intensity of each hotspot signal is compared with a preset intensity range. If the intensity of a hotspot signal falls within the preset intensity range, the network device corresponding to the hotspot signal is identified. The hotspot signal of the network device is sent to the cloud server. The cloud server directly appends the network device corresponding to the hotspot signal to the set of devices to be networked after receiving the hotspot signal, so as to obtain a device to be networked.

In operation 153, after the network device is networked, the network device directly sends the device information to the cloud server according to the sending instruction formed by a user pressing a button. The cloud server directly appends the device information to the set to be networked after receiving the device information, so as to realize the binding of the network device.

FIG. 3 depicts a flowchart showing a method for networking according to another embodiment of the present invention. Operation 101 includes, but is not limited to, operations 111 to 113.

At operation 111, a plurality of different first network parameters of each of a plurality of devices to be networked are received.

At operation 112, weighted average is performed on the plurality of first network parameters according to preset weights to obtain a network score for each device to be networked.

At operation 113, the device to be networked with the highest network score is determined as the first master device, and each device to be networked other than the first master device among the plurality of devices to be networked is determined as a child device.

It should be noted that the first master device is determined as a gateway via which the child devices transmit and receive data. Thus, the selection of the first master device is to obtain the device to be networked with the best network performance. Therefore, a plurality of different first network parameters are subjected to weighted average according to the preset weights to obtain the network score for each device to be networked. The higher network score indicates better the network performance of the device to be networked. Thus, the device to be networked with the highest network score is identified as the first master device. Then the rest of the devices to be networked are determined as child device. The device to be networked with the best network performance operates as the gateway.

In an implementation, the first network parameter includes at least one of, LTE wireless data upload and download rates, WAN port rate, network signal strength, number of surrounding Wi-Fi hotspots, or RSSI information. If the score matching table corresponding to the first network parameters is defined, and the score corresponding to each first network parameter is found through the score matching table. Then the network score is calculated according to the weights corresponding to different first network parameters. For example, if the first network parameters of a device to be networked A include: LTE wireless data upload and download rates, WAN port rate, network signal strength, number of surrounding Wi-Fi hotspots and RSSI information, and the corresponding scores are determined as *a, b, c, d* and *e* according to the score matching table. The weights corresponding to the upload and download rates of LTE wireless data, WAN port rate, network signal strength, the number of surrounding Wi-Fi hotspots, and RSSI information are *q1, q2, q3, q4,* and *q5* respectively. Then the network score Z is calculated with *Z*=*a*q1*+*b*q2*+*c*q3*+*d*q4*+*e*q5.* The above calculation is performed for each device to be networked, to obtain the network scores of the plurality of devices to be networked. Then the device to be networked with the highest network score is selected as the first master device.

In an embodiment, after determining the first master device and the child device(s), a first switching instruction is sent to each of the device to be networked. For a device to be networked that is determined as the first master device, a first switching instruction for switching the operating mode to the first master device is sent to the device to be networked, such that the device to be networked is switched to be the first master device according to the first switching instruction. For a device to be networked that is determined as a child device, the first switching instruction for switching the operating mode to the child device is sent to the device to be networked, such that the device to be networked is switched to be the child device according to the first switching instruction. After the device to be networked is switched to be the first master device, the cloud server receives first hotspot information sent from the first master device. The first hotspot information includes fronthaul information and backhaul information. Fronthaul information refers to the connection information between the indoor baseband processing unit (BBU) of the antenna and the base station controller. The backhaul information refers to the information about the transmission of voice and data from the source site to the switch. After receiving the first hotspot information, the cloud server stores the first hotspot information and sends the first hotspot information to each child device, such that each child device establishes a network connection with the first master device according to the first hotspot information. It is not necessary to input the first hotspot information of the first master device to each child device for network connection with the first master device. In this way, each child device can rapidly establish a network connection with the first master device with simpler operation.

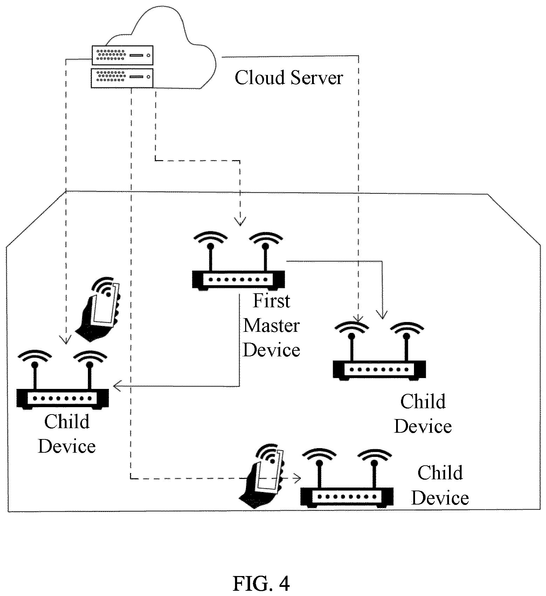

FIG. 4 depicts an architectural diagram showing a system in which a method for networking according to some embodiments of the present invention may be carried out. Four devices to be networked are shown by way of an example. Each device to be networked is connected to the cloud server through the WAN. The cloud server selects the device to be networked with the best network performance as the first master device according to the first network parameters uploaded by the four devices to be networked, and then sends a first switching instruction to each device to be networked so as to switch each device to be the first master device or a child device. Then the other three child devices establish network connection through the first hotspot information of the first master device. The data of the three child devices are forwarded to the WAN through the first master device.

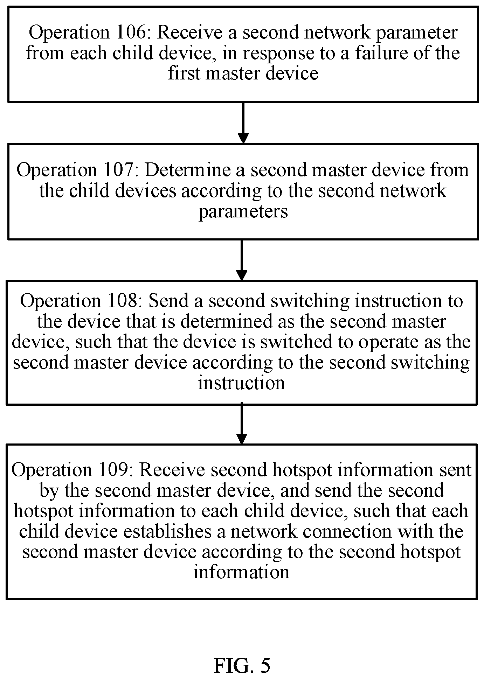

FIG. 5 depicts a flowchart showing a method for networking according to another embodiment of the present invention. The method further includes, but is not limited to, operations 106 to 109.

At operation 106, a second network parameter is received from each child device, in response to a failure of the first master device.

At operation 107, a second master device is determined from the child devices according to the second network parameters.

At operation 108, a second switching instruction is sent to the device that is determined as the second master device, such that the device is switched to be the second master device according to the second switching instruction.

At operation 109, second hotspot information sent by the second master device is received, and the second hotspot information is sent to each child device, such that each child device establishes a network connection with the second master device according to the second hotspot information.

It should be noted that in some cases, if the first master device fails after networking is successful, a user is informed that the first master device has network problems by a flashing failure light. However, the user does not know how to recover from the failures, and the device itself cannot recover from the failures. Therefore, the existing networking technology requires manual operation for network fault clearing, and the efficiency is low. After successful networking, if the network connection of the first master device fails, it is usually to restart the first master device to see whether the fault is cleared, but sometimes restarting the first master device can not restore the network connection. According to an embodiment of the present invention, when the first master device fails, the second network parameters of the child devices are received. The alternative second master device is determined from the child devices according to the second network parameters. Then the second switching instruction is sent to the child device that is determined as the second master device, such that the device is switched to be the second master device according to the second switching instruction. Then the second hotspot information of the second master device is sent to the child devices. Then each child device establishes a network connection with the second master device through the second hotspot information. Therefore, when the first master device fails, the alternative second master device is determined as the gateway, so as to rapidly restore the network connection and realize the rapid recovery of data transmission.

In an implementation, the second network parameter includes at least one of, LTE wireless data upload and download rates, WAN port rate, network signal strength, number of surrounding Wi-Fi hotspots, or RSSI information. In an embodiment, a plurality of different second network parameters are received from each child device. Weighted average is performed on the plurality of second network parameters according to preset weights to obtain the network score for each child device. The child device with the highest network score is determined as the second master device. The child devices except the second master device among the plurality of child devices still operate as the child devices. Then a second switching instruction is sent to the device that is determined as the second master device, so as to switch the device from the child device to the second master device. In this way, the second master device is chosen as an alternative master device when the first master device fails. The child devices can rapidly restore the network connection and send data to the WAN through the second master device.

For example, if the child device with the address of 192.168.0.6 is ready to send a message to a WeChat friend over the WAN, and the traffic of the child device with the address of 192.168.0.6 shall pass via the first master device with the address of 192.168.0.1. At this point, the first master device fails to provide WAN connection. In response to this, the cloud server re-selects the second master device with the address 192.168.0.5. Then the child device with the address of 192.168.0.6 sends the data packets to the second master device with the address of 192.168.0.5. The second master device with the address of 192.168.0.5 further packages the data packets and sends them to the WAN. In this way, rapid recovery of network connection is achieved automatically, thus the efficiency of network recovery is improved.

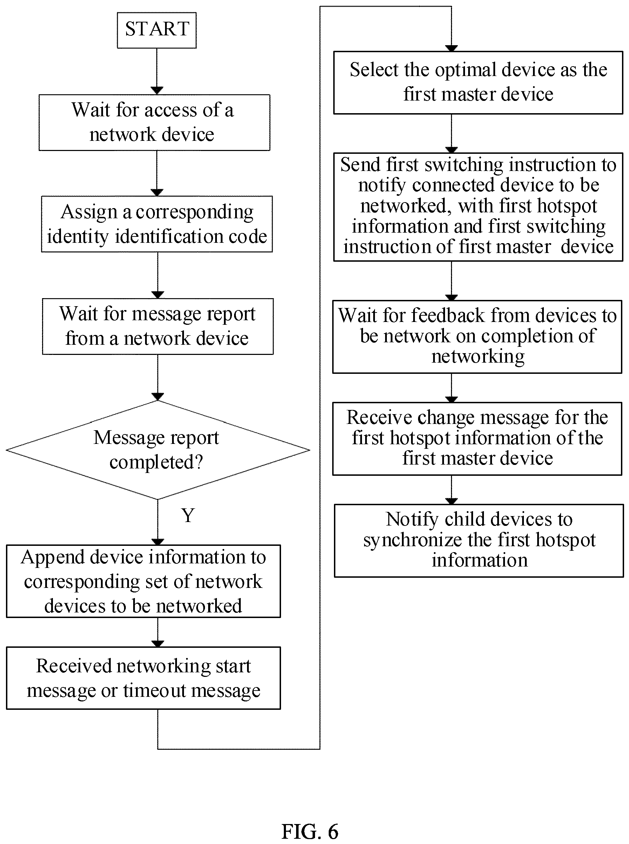

FIG. 6 depicts a flow chart showing the operations of a cloud server in a method for networking according to an embodiment of the present invention. After the cloud service is started, the cloud server waits for a terminal device or a network device to access. When the terminal device accesses, the cloud server receives the address information or hotspot signal sent by the terminal device, then determines the corresponding device information according to the address information or hotspot signal, and appends the device information to the set of devices to be networked to obtain a device to be networked. When a network device accesses, the cloud server directly receives the device information sent by the network device, and directly appends the device information to the set of devices to be networked to obtain a device to be networked. The binding between the cloud server and the network device is completed to obtain the device to be networked. The corresponding identity identification code is assigned to the device to be networked, and the identity identification code is the unique identification of the device to be networked. In case of an initial access of a device to be networked, the first hotspot information is reported by the device to be networked to the cloud server. The first hotspot information includes, LTE wireless data upload and download rates, WAN port rate, network signal strength, number of surrounding Wi-Fi hotspots, and RSSI information. The set of devices to be networked is set in advance on the cloud server. For a network device that does not exist in the set of devices to be networked, the network device is bound according to the information reported by the terminal device or the network device. The user can add the device information of the network devices to the set of devices to be networked by pressing buttons or through an APP, so as to realize the binding of the network device. The information of starting networking or timeout is received. After the devices to be networked are determined, the optimal device is selected as the first master device according to the first hotspot information uploaded by each of the devices to be networked. The other devices to be networked except the first master device are the child devices. The cloud server sends a first switching instruction to inform the devices to be networked to switch device identities (operating mode). After receiving the first switching instruction, the device that is determined as the first master device sends first hotspot information to the cloud server, and then switches to be the first master device according to the first switching instruction. After receiving the first hotspot information, the cloud server sends the device identity change message of the first master device and the first hotspot information to each child device in the set of devices to be networked, so as to complete the automatic networking of the devices to be networked. After sending the first hotspot information, the cloud server waits for the first master device and child devices to feed back the networking completion message. After receiving the networking completion message of the first master device and all child devices, the network connection between each child device and the cloud server is disconnected. Then the cloud server keeps monitoring the first hotspot information of the first master device until receiving the change message of the first hotspot information of the first master device. Then the cloud server sends the changed first hotspot information to each child device to re-establish the network connection with the first master device, such that each child device is synchronized with the first hotspot information of the first master device in real time, so as to rapidly restore the network connection between each child device and the first master device. Therefore, the cloud server automatically selects the first master device and the child devices, and sends the first hotspot information to the child devices, such that each child device establishes a network connection with the first master device according to the first hotspot information. In this way, automatic networking is achieved without manual parameter settings, manpower is saved and networking efficiency is improved.

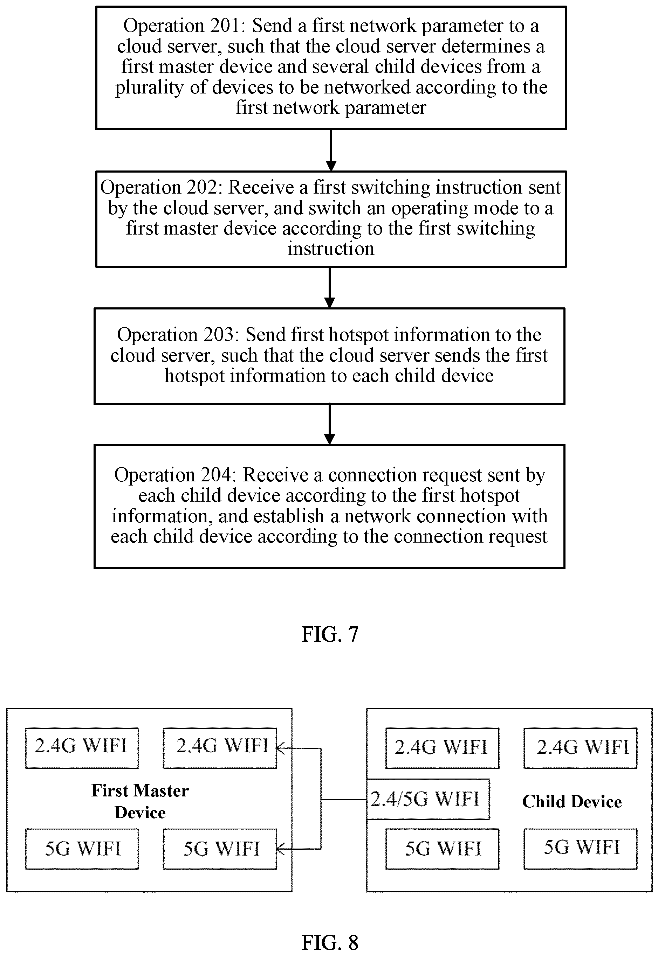

According to a second aspect of the present invention, another method for networking is provided. The method is carried out by the first master device. FIG. 7 depicts a flowchart showing a method for networking according to an embodiment of the present invention. The method includes, but is not limited to, operations 201 to 204.

At operation 201, a first network parameter is sent to a cloud server, such that the cloud server determines a first master device and several child devices from a plurality of devices to be networked according to the first network parameter.

At operation 202, a first switching instruction sent by the cloud server is received, and an operating mode is switched to a first master device according to the first switching instruction.

At operation 203, first hotspot information is sent to the cloud server, such that the cloud server sends the first hotspot information to each child device.

At operation 204, a connection request sent by each child device according to the first hotspot information is received, and a network connection is established with each child device according to the connection request.

According to the above operations 201 to 204, the first network parameter is sent to the cloud server by each device. The first master device and several child devices are determined by the cloud server according to the first network parameters. The first switching instruction sent by the cloud server is received after the first master device is determined. The operating mode is switched to the first master device according to the first switching instruction. The first hotspot information is sent to the cloud server. Then the connection request sent by each child device according to the first hotspot information is received to establish a network connection with each child device. As such, the first master device operates as a gateway to transmit data from each child device to the WAN, or receive data from WAN to each child device. Therefore, it is only necessary to send the first network parameters to the cloud server, and then automatic networking is carried out, without manual parameter setting. Thus, manpower is saved and networking efficiency is improved.

It should be noted that the device to be networked can be in a master device operating mode or a router operating mode (i.e., the child device operating mode) in the factory mode. For the child device operating mode, only two wireless access points are driven for Wi-Fi connection, one is a 2.4G Wi-Fi access point, and the other is a 5G Wi-Fi access point, to which a terminal device with Wi-Fi can be connected. For the master device operating mode, four wireless access points are driven for Wi-Fi connection, two are 2.4G Wi-Fi access points and two are 5G Wi-Fi access points. One of the wireless access points is employed as a backhaul, and the backhaul is not for connection to the terminal device, but is only employed for establishing networking connection between the master device and the child devices. A device to be networked set to operate in a router operating mode by default is restarted after receiving the first switching instruction to switch the device identity (i.e., the operating mode). The device identity of the device to be networked is switched after the restart. For the first master device, if the default routing mode is the master device, after receiving the first switching instruction, the first master device directly sends the first hotspot information to the cloud server without switching the device identity. However, if the default routing mode is child device, the first master device is restarted after receiving the first switching instruction. After the restart, the first master device is switched to be the first master device, and sends the first hotspot information to the cloud server.

FIG. 8 depicts a schematic diagram showing a networking connection of a method for networking according to an embodiment of present invention. The device to be networked, as a router, has two wireless access points, one is a 2.4G Wi-Fi access point and the other is a 5G Wi-Fi access point. After the device to be networked is switched to be the first master device, the first master device has four wireless access points with two 2.4G Wi-Fi access points, and two 5G Wi-Fi access points. The child device has two wireless access points. A 2.4G Wi-Fi access point or a 5G Wi-Fi access point in the first master device is connected with the 2.4G Wi-Fi access point or the 5G Wi-Fi access point of the child device to realize networking.

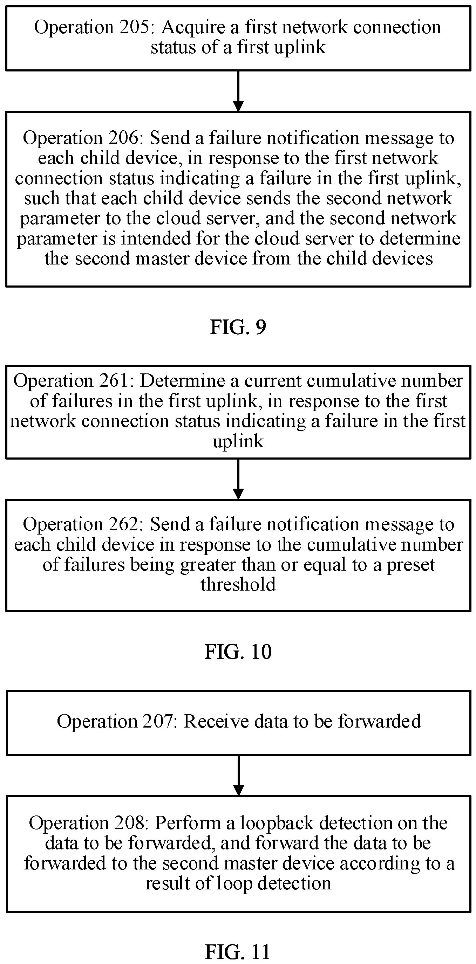

FIG. 9 depicts a flowchart showing a method for networking according to another embodiment of the present invention. The method further includes but is not limited to operation 205 and operation 206.

At operation 205, a first network connection status of a first uplink is acquired.

At operation 206, a failure notification message is sent to each child device, in response to the first network connection status indicating a failure in the first uplink, such that each child device sends the second network parameter to the cloud server, and the second network parameter is intended for the cloud server to determine the second master device from the child devices.

In an implementation, the first hotspot information uploaded by the first master device to the cloud server includes fronthaul information and backhaul information. The first master device activates two backhauls for the child devices to connect. Each child device sends a connection request to the first master device according to the first hotspot information. The wireless access point of each child device establishes network connection with the first uplink of the first master device, so as to realize automatic networking. Therefore, by obtaining the first network connection status of the first uplink, the network connection status of the first master device and the WAN is obtained. If the network connection status between the first master device and the WAN is in a fault status, i.e., the first network connection status indicates a failure in the first uplink, the first master device broadcasts a failure notification message to each child device. Thus, each child device sends the second network parameter to the cloud server. The cloud server determines the second master device from the child devices, such that the child devices can rapidly restore the network connection and resume data transmission and reception.

It should be noted that the first master device periodically obtains the first network connection status of the first uplink according to the preset time period. When the first network connection status indicates a failure in the first uplink, the first master device is still connecting with each child device. During the recovery of the first uplink indicated by the first network connection status, the data transmission and reception of each child device is forwarded by the second master device. When the first network connection status indicates that the first uplink connection status has been restored, the first master device will continue to serve as a gateway to send the data packets from each child device to the WAN.

FIG. 10 depicts a flowchart showing a method for networking according to another embodiment of the present invention. Operation 206 includes, but is not limited to, operations 26 1 and 262.

At operation 261, a current cumulative number of failures in the first uplink is determined, in response to the first network connection status indicating a failure in the first uplink.

At operation 262, a failure notification message is sent to each child device in response to the cumulative number of failures being greater than or equal to a preset threshold.

In an implementation, the cloud server obtains the first network connection status according to a preset time interval. Thus, every time when the preset time interval is reached, in response to the first network connection state indicating a failure in the first uplink, the cumulative number of failures of the first uplink is increased by 1. When the cumulative number of failures is greater than or equal to the preset threshold, a failure notification message is sent to each child device. In this way, the second master device can be selected as the gateway for the child devices when excessive network connection status failures between the first master device and the WAN, so as to ensure the stability of the network connection and the network transmission performance.

FIG. 11 depicts a flowchart showing a method for networking according to another embodiment of the present invention. The method further includes but is not limited to operation 207 and operation 208.

At operation 207, data to be forwarded is received.

At operation 208, a loop detection is performed on the data to be forwarded, and the data to be forwarded is forwarded to the second master device according to a result of loop detection.

It should be noted that, since the data to be forwarded originally sent by the child device cannot be forwarded to the WAN after the first master device fails. The first master device then carries out a loop detection on the data to be forwarded to determine which data to be forwarded have not been forwarded to the WAN, and then sends the unsent data to the second master device. The second master device sends the original data to be forwarded to the WAN to restore the forwarding of the data to be forwarded of the child device.

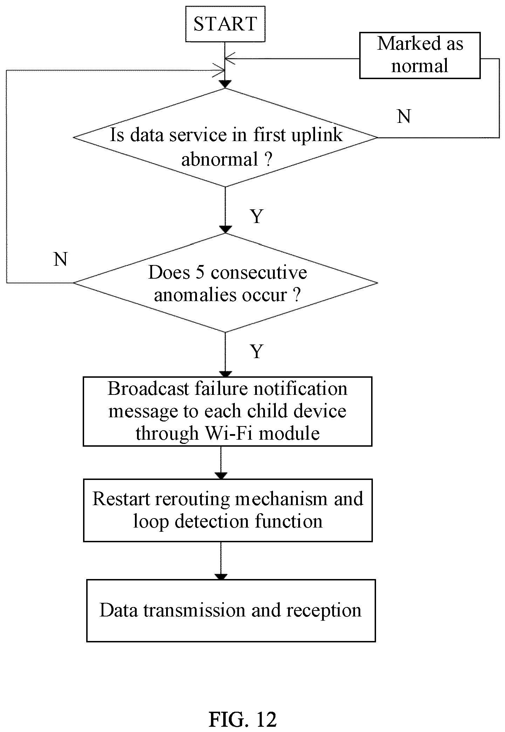

FIG. 12 depicts a flowchart showing the operations of a master device in a method for networking according to an embodiment of the present invention, with the preset threshold set to 5. The network device operates in the master device mode. That is, the first master device operates. A process is set on the first master device to regularly detect the data service of the first uplink. If the data service is abnormal, the process will identify that the first uplink has a fault, and then determine the cumulative number of faults of the first uplink. If the cumulative number of faults is 5, a failure notification message is broadcast to the child devices through the Wi-Fi module. Then the restart operation and loop detection functions are performed. The data packets determined by the loop detection function are sent to the second master device. The second master device sends data packets to the WAN to achieve rapid network recovery. In particular, loop detection, also known as closed-loop detection, refers to the ability of a robot to recognize that it has arrived at a scene, making the map closed-loop. Thus, the first master device carries out loop detection to determine whether the data to be forwarded has been forwarded to the WAN. If the data has not been forwarded, then the data to be forwarded is sent to the second master device. The second master device in turn forwards the data to be forwarded to rapidly restore data sending and receiving.

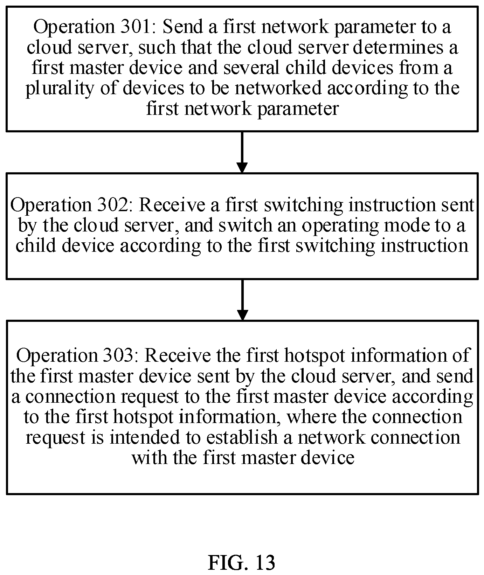

According to a third aspect of the present invention, another method for networking is provided. The method is carried out by a child device. FIG. 13 depicts a flowchart showing a method for networking according to an embodiment of the present invention. The method includes, but is not limited to, operations 301 to 303.

At operation 301, a first network parameter is sent to a cloud server, such that the cloud server determines a first master device and several child devices from a plurality of devices to be networked according to the first network parameter.

At operation 302, a first switching instruction sent by the cloud server is received, and an operating mode is switched to a child device according to the first switching instruction.

At operation 303, the first hotspot information of the first master device sent by the cloud server is received, and a connection request is sent to the first master device according to the first hotspot information, where the connection request is intended to establish a network connection with the first master device.

According to the above operations 301 to 303, the first network parameter is sent to the cloud server by each device. The first master device and several child devices are determined by the cloud server according to the first network parameters. Then the first switching instruction sent by the cloud server is received to switch to be a child device according to the first switching instruction. Then the first hotspot information sent by the cloud server is received to establish a network connection with the first master device through the first hotspot information. In this way, automatic networking is achieved without manual parameter settings, manpower is saved and networking efficiency is improved.

In an implementation, if the device to be networked was set to be a master device by default at the factory, after receiving the first switching instruction to switch to be a child device, the device to be networked is restarted and then switched to be the child device according to the first switching instruction. Then two wireless access points, one is a 2.4G Wi-Fi access point and the other is a 5G Wi-Fi access point, are driven for Wi-Fi connection, and then network connection is established according to the 2.4G Wi-Fi access point or the 5G Wi-Fi access point of the first hotspot information and the backhaul of the first master device, so as to realize automatic networking.

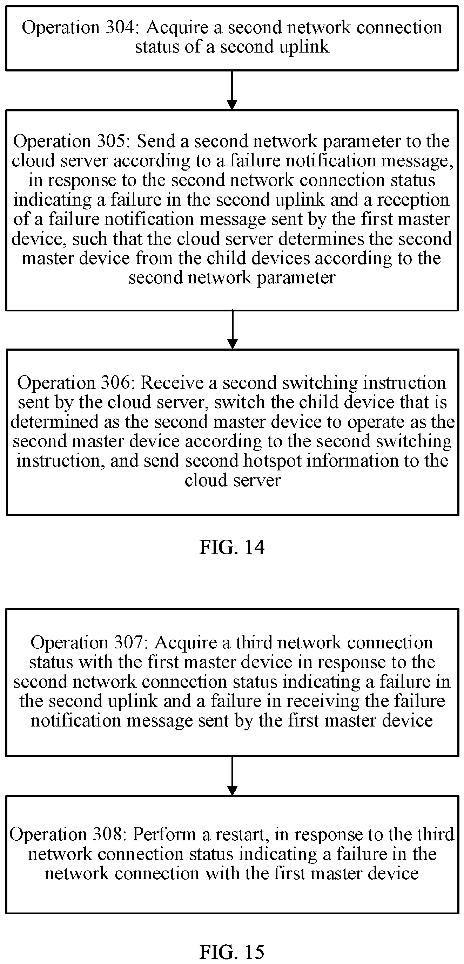

FIG. 14 depicts a flowchart showing a method for networking according to another embodiment of the present invention. The method further includes, operations 304 to 306.

At operation 304, a second network connection status of a second uplink is acquired.

At operation 305, a second network parameter is sent to the cloud server according to a failure notification message, in response to the second network connection status indicating a failure in the second uplink and a reception of a failure notification message sent by the first master device, such that the cloud server determines the second master device from the child devices according to the second network parameter.

At operation 306, a second switching instruction sent by the cloud server is received, and the child device that is determined as the second master device is switched to be the second master device according to the second switching instruction, and second hotspot information is sent to the cloud server.

In an implementation, when the network connection between the first master device and a child device is faulty, the second network connection status indicates a failure in the second uplink. The child device also obtains the second network connection status according to the preset time interval period to judge whether the network connection between the child device and the first master device is normal. If the acquired second network connection status is indicative of a failure in the second uplink and the failure notification message sent by the first master device is received, it is indicated that the failure of the network connection between the first master device and the child device is caused by the failure of the first master device. Then the second network parameter is sent to the cloud server, such that the cloud server determines an alternative second master device according to the second network parameter. The second switching instruction sent by the cloud server is received. And the device as determined is switched to be the second master device according to the second switching instruction, and sends the second hotspot information to the cloud server. In this way, each of the other child device establishes a network connection with the second master device according to the second hotspot information. When failing to receive the second hotspot information sent by the cloud server, a child device establishes a network connection with the second master device according to the second hotspot information sent by the second master device. The child device can rapidly restore the network connection. In this way, the network connection is restored to forward the data packet to the WAN through the second master device.

FIG. 15 depicts a flowchart showing a method for networking according to another embodiment of the present invention. The method further includes, operations 307 to 308.

At operation 307, a third network connection status with the first master device is obtained in response to the second network connection status indicating a failure in the second uplink and a failure in receiving the failure notification message sent by the first master device.

At operation 308, a restart is performed, in response to the third network connection status indicating a failure in the network connection with the first master device.

In an implementation, when the second network status indicates the failure in the second uplink and the failure notification message sent by the first master device has not been received, it is indicated that the first master device is normal, while the network connection between the first master device and the child device is abnormal. Thus, the child device cannot normally send data to the first master device. In this case, restart is performed. The child device re-establishes the network connection with the first master device according to the first hotspot information after the restart, so as to rapidly restore the network connection and realize normal data transmission and reception. In an implementation, when the second network status indicates that the second uplink fails and the failure notification message sent by the first master device is not received, the number of abnormal network connections is obtained. And restart is performed in response to the number of abnormal network connections being greater than or equal to a preset threshold, to rapidly restore the network connection between the child device and the first master device.

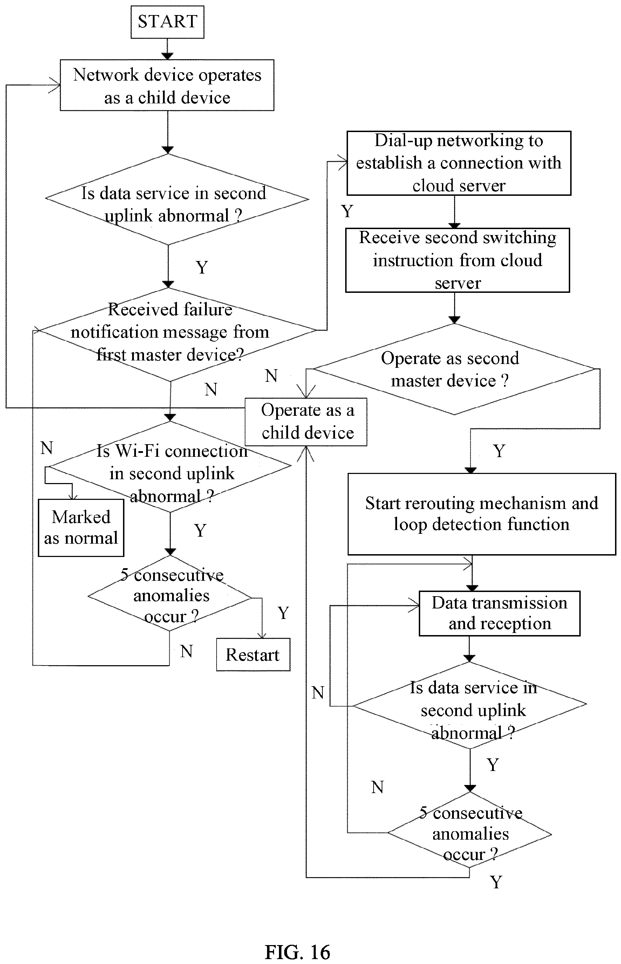

FIG. 16 depicts a flowchart showing the operations of a child device in a method for networking according to an embodiment of the present invention. After completing the device identity switching, the child device obtains the second network connection status according to the preset time interval, i.e., the data service status of the second uplink. If the data service status is abnormal, it is judged that the network connection between the child device and the first master device is abnormal. And a determination as to whether the failure notification message sent by the first master device is received is performed. If the failure notification message is not received, the network connection status is detected, and the number of network connection failures is obtained. If the number of network connection failures is more than or equal to 5, it is indicated that 5 successive failures occur, and a restart is performed. If the network connection status is normal, the child device continues to wait for the failure notification message sent by the first master device. When receiving the failure notification message sent by the first master device, the child device starts the dial-up networking module, connects to the cloud server through the dial-up networking module, and reports the second network parameters to the cloud server. That is, the upload and download rates of LTE wireless data, WAN port rate, network signal strength, number of surrounding Wi-Fi hotspots and RSSI information of the child devices are sent to the cloud server. As such, the cloud server selects the child device with the best network performance as the second master device according to the second network parameters. The child device that is determined as the second master device to be the second master device, when receiving the second switching instruction sent by the cloud server to establish network connection with other child devices, and forwards the data to be forwarded by other child devices to the WAN. Meanwhile the rerouting mechanism and loop detection function are activated to receive the data to be forwarded sent by the first master device and send the data to the WAN. In response to a reception of the second hotspot information sent by the cloud server, a network connection is established with the second master device according to the second hotspot information. In an embodiment, when the child device is switched to be the second master device and the second uplink failure is detected for five consecutive times, the child device would lose its device identity as the second master device. Then the child device is restarted and switched to be a child device. The cloud server then reselects another second master device.

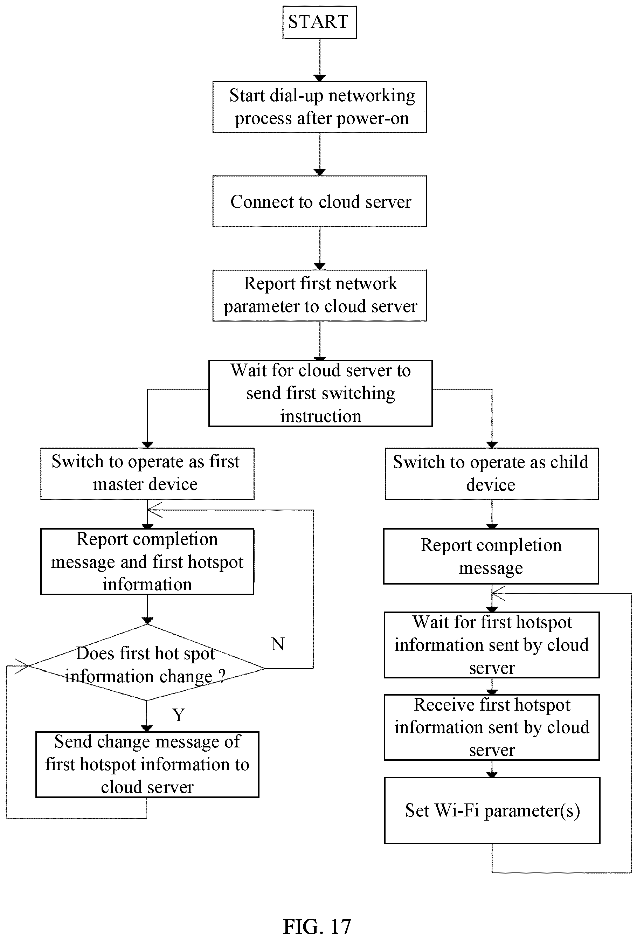

FIG. 17 depicts a flowchart showing a method for networking between a first master device and a child device according to an embodiment of the present invention. Before the networking, each of the devices to be networked is powered on. After being power-on, each device to be networked automatically performs the dial-up internet access process. After a successful dialing up, each device establishes a connection with the cloud server, and reports its first network parameters to the cloud server, then waits for the first switching instruction sent by the cloud server after determining the first master device and the child devices according to the first network parameters. When receiving the first switching instruction for switching to be the first master device, the device is switched to be the first master device, according to the first switching instruction with two wireless access points for backhauls are activated, i.e., two backhaul AP hotspots, and reports the first hotspot information to the cloud server. The first hotspot information includes fronthaul information and backhaul information. Then the first master device establishes a network connection each child device. If the first hotspot information of the first master device is modified during the network connection between the first master device and each child device, the first master device sends the modified first hotspot information to the cloud server. The cloud server sends the modified first hotspot information to each child device, such that each child device re-establishes a communicative connection with the first master device. If the first switching instruction to switch to be the child device is received, the child device performs the switching first, then reports the switching completion message to the cloud server, and waits for the first hotspot information sent by the cloud server, so as to set hotspot parameters according to the first hotspot information. In this way, Wi-Fi parameters are set, so as to facilitate the child device to establish a network connection with the first master device.

According to a fourth aspect of the present invention, a device for networking is provided. The device includes a memory, a processor and a computer program stored in the memory and executable by the processor which, when executed by the processor causes the processor to carry out the method which is performed by a cloud server as described above.

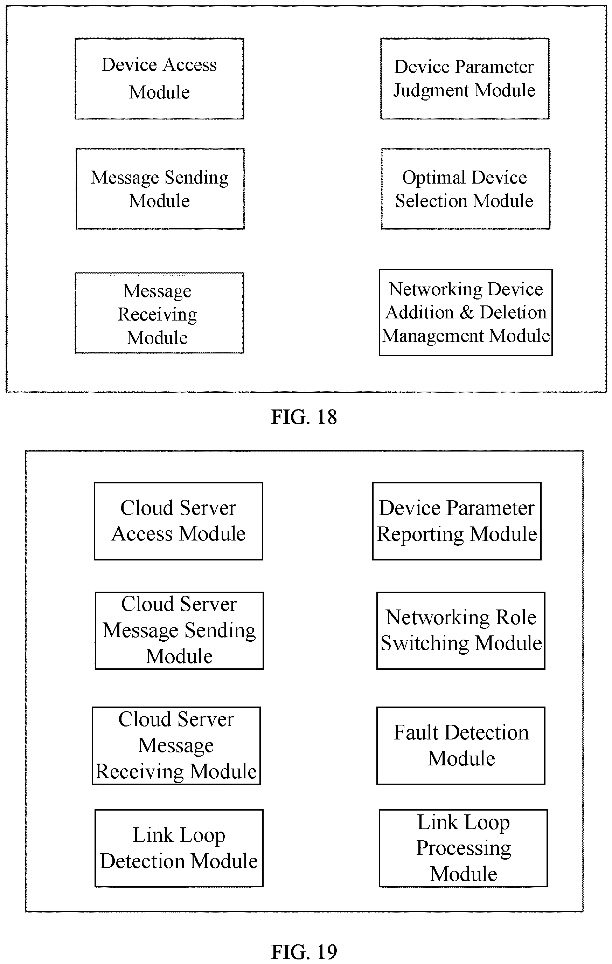

In an embodiment, the device for networking is a cloud server. FIG. 18 depicts a schematic diagram showing a device for networking according to an embodiment of the present invention. In an implementation, the cloud server has the functions of managing the devices to be networked, communicating with the devices to be networked, selecting the optimal device to be networked, and deleting and adding the devices to be networked. The cloud server includes a device access module, a message sending module, a message receiving module, a device parameter judgment module, an optimal device selection module and a networking device addition and deletion management module. The device access module is configured to connect a network device that attempts to access the cloud server. The cloud server uniquely identifies the network device through address information or device serial number, and further sends messages to or receives messages from the network device through the unique identification. The message sending module is configured to send messages including switching instructions of device identities and hotspot information of the first master device or the second master device. The message receiving module is configured to receive a first network parameter sent by a device to be networked, or a second network parameter sent by a child device. The device parameter judgment module is configured to determine the first master device and the child devices according to the first network parameters, and determine the second master device according to the second network parameters, and the device parameter judgment module performs weighted average according to different first network parameters or second network parameters to obtain a network score. The optimal device selection module is configured to determine the first master device and the child devices or determine the second master device according to the network score. The networking device addition and deletion management module is configured to add the device information of network devices to the set of devices to be networked before networking, so as to obtain the devices to be networked for group management.

According to a fifth aspect of the present invention, a device for networking is provided. The device includes a memory, a processor and a computer program stored in the memory and executable by the processor which, when executed by the processor causes the processor to carry out the method according to the second aspect or the third aspect as described above.

In an embodiment, the device for networking is the device to be networked. FIG. 19 depicts a schematic diagram showing a device to be networked according to an embodiment of the present invention. As shown in FIG. 19, the device includes a cloud server access module, a cloud server message sending module, a cloud server message receiving module, a device parameter reporting module, a networking role switching module, a fault detection module, a link loop detection module and a link loop processing module. The cloud server access module is configured to establish a communicative connection with the cloud server after networking. The cloud server message sending module is configured to send a first network parameter of the device to be networked or the second network parameter of the child device to the cloud server. The cloud server message receiving module is configured to receive the control instruction, the first hotspot information or the second hotspot information sent by the cloud server, where the control instruction includes a role switching instruction or a network disconnection instruction. The device parameter reporting module is configured to send the first hotspot information to the cloud server when the device to be networked operates as the first master device, or to send the second hotspot information to the cloud server when the device to be networked operates as the second master device. The networking role switching module is configured to switch the device identity when the cloud server issues the first switching instruction or the second switching instruction. The fault detection module is configured to detect an abnormal situation of the first master device or the child device in the first uplink or the second uplink. The link loop detection module selects a new second master device to start after the child device or the first master device fails. The link loop detection module is configured to detect in advance whether the data packet can loop back, and is further configured to send the data packet to the second master device according to the result of the loop detection, so as to recover the normal transmission of the data packets.

According to a sixth aspect of the present invention, a computer-readable storage medium is provided. The computer-readable storage medium stores thereon a computer-executable instruction which, when executed by a processor causes the processor to carry out any one of the methods of the first aspect, the second aspect or the third aspect as described above.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

According to some embodiments of the present invention, a first network parameter is received from each of a plurality of devices to be networked. A first master device and several child devices are determined from the plurality of devices to be networked according to the first network parameters. A first switching instruction is sent to each of the devices to be networked, such that each of the devices to be networked is switched to be the first master device or as the child device according to the first switching instruction. The first hotspot information sent by the first master device is sent to each child device, such that the respective child device establishes a network connection with the first master device according to the first hotspot information. In this way, automatic networking is achieved without manual parameter settings, manpower is saved and networking efficiency is improved. The networking is more efficient and convenient.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, storage device or other magnetic storage devices, or any other medium that can be configured to store desired information and accessible by a computer. Furthermore, it is well known to ta person having ordinary skills in the art that communication media usually contains computer-readable instructions, data structures, program modules or other data in modulated data signals such as carrier waves or other transmission mechanisms, and can include any information delivery media.

It should also be understood that various implementations set forth in some embodiments of the present invention can be combined to achieve different technical effects without limitations.

Described above is a description for several embodiments of the present invention, but the present invention is not limited to the above embodiments. Those having ordinary skills in the art can make various equivalent modifications or substitutions without departing the scope of the present invention, and these equivalent modifications or substitutions are within the scope defined by the claims of the present invention.

## Claims

1. A method for networking, comprising:
receiving aplurality of first network parameters each from a respective one of a plurality of devices to be networked, and determining one first master device and several child devices from the plurality of devices to be networked according to the first network parameters of the plurality of devices to be networked ;
sending a first switching instruction to each of the plurality of devices to be networked, to instruct one of the plurality of devices to be networked to switch to be the first master device, and each of the plurality of devices to be networked other than the first master device to switch to be one of the child devices according to the first switching instruction;
receiving first hotspot information sent by the first master device; and
sending the first hotspot information to at least one of the child devices, to instruct the at least one of the child devices to establish a network connection with the first master device according to the first hotspot information.

2. The method according to claim 1, wherein before receiving the first network parameter from each of the plurality of devices to be networked, the method further comprises:
binding a network device according to a preset binding method to obtain a device to be networked of the plurality of devices to be networked.

3. The method according to claim 2, wherein binding the network device according to the preset binding method to obtain the device to be networked of the plurality of devices to be networked comprises any one of:
receiving address information of the network device, determining device information of the network device according to the address information, and appending the device information to a set of devices to be networked to obtain the device to be networked;
receiving a hotspot signal of the network device, and appending the device information corresponding to the hotspot signal to the set of devices to be networked to obtain the device to be networked; or
receiving the device information of the network device, and appending the device information to the set of devices to be networked to obtain the device to be networked.

4. The method according to claim 1, wherein receiving the first network parameter from each of the plurality of devices to be networked, and determining the first master device and several child devices from the plurality of devices to be networked according to the first network parameters comprises:
receiving a plurality of different first network parameters from each of the plurality of devices to be networked, wherein the first network parameter is one of the plurality of different first network parameters;
performing weighted average on the plurality of first network parameters according to preset weights to obtain a network score for each device to be networked; and
determining the device to be networked with highest network score as the first master device, and determining several devices to be networked other than the first master device among the plurality of devices to be networked as child devices.

5. The method according to any one of claims 1 to 4, further comprising:
receiving a second network parameter from each of the child devices, in response to a failure of the first master device;
determining a child device from the child devices as a second master device according to the second network parameters;
sending a second switching instruction to the child device that is determined as the second master device, to instruct the child device to switch to be the second master device according to the second switching instruction; and
receiving second hotspot information sent by the second master device, and sending the second hotspot information to each of child devices, to instruct each of the child devices to establish a network connection with the second master device according to the second hotspot information.

6. A method for networking, comprising:
sending a first network parameter to a cloud server, such that the cloud server determines a first master device and several child devices from a plurality of devices to be networked according to the first network parameter;
receiving a first switching instruction sent by the cloud server, and switching to be the first master device according to the first switching instruction;
sending first hotspot information to the cloud server, such that the cloud server sends the first hotspot information to each of serval child devices; and
receiving a connection request sent by at least one of the child devices according to the first hotspot information, and establishing a network connection with the at least one of the child devices according to the connection request.

7. The method according to claim 6, further comprising:
acquiring a first network connection status of a first uplink;
sending a failure notification message to each of the child devices, in response to the first network connection status indicating a failure in the first uplink, to instruct the child devices to send a plurality of second network parameters to the cloud server, each of the plurality of second network parameters is from a respective one of the child devices, and the second network parameters are provided to the cloud server to determine a second master device from the child devices.

8. The method according to claim 7, wherein sending the failure notification message to each of the child devices, in response to the first network connection status indicating the failure in the first uplink comprises:
determining a current cumulative number of failures in the first uplink, in response to the first network connection status indicating the failure in the first uplink; and
sending the failure notification message to each of the child devices in response to the cumulative number of failures being greater than or equal to a preset threshold.

9. The method according to claim 7 or claim 8, further comprising:
receiving data to be forwarded;
performing a loop detection on the data to be forwarded, and forwarding the data to be forwarded to the second master device according to a result of the loop detection.

10. A method for networking, comprising,
sending a first network parameter to a cloud server, such that the cloud server determines a first master device and several child devices from a plurality of devices to be networked according to the first network parameter;
receiving a first switching instruction sent by the cloud server, and switching to a child device among the several child devices according to the first switching instruction; and
receiving first hotspot information of a first master device sent by the cloud server, and sending a connection request to the first master device according to the first hotspot information; wherein the connection request is intended to request for establishing a network connection with the first master device.

11. The method according to claim 10, further comprising:
acquiring a second network connection status of a second uplink;
sending a second network parameter to the cloud server according to a failure notification message, in response to both the second network connection status indicating a failure in the second uplink and a reception of the failure notification message sent by the first master device, such that the cloud server determines a second master device from the child devices according to the second network parameter; and
receiving a second switching instruction sent by the cloud server, and switching to be the second master device according to the second switching instruction, and sending second hotspot information to the cloud server.

12. The method according to claim 11, further comprising:
acquiring a third network connection status with the first master device in response to both the second network connection status indicating the failure in the second uplink and the failure in receiving the failure notification message sent by the first master device; and
performing a restart, in response to the third network connection status indicating the failure in the network connection with the first master device.

13. A device for networking, comprising, a processor, and a memory storing thereon a computer program executable by the processor which, when executed by the processor, causes the processor to carry out
the method as claimed in any one of claims 1 to 5.

14. An apparatus for networking, comprising, a processor, and a memory storing thereon a computer program executable by the processor which, when executed by the processor, causes the processor to carry out
the method as claimed in any one of claims 6 to 9, or the method as claimed in any one of claims 10 to 12.

15. A computer-readable storage medium storing a computer-executable instruction which when executed by a processor, causes the processor to carry out
the method as claimed in any one of claims 1 to 5, the method as claimed in any one of claims 6 to 9, or the method as claimed in any one of claims 10 to 12.
